# EUROPEAN PATENT SPECIFICATION

(11) **EP 4 537 152 B1**
(45) Date of publication and mention of the grant of the patent: **09.12.2026**
(21) Application number: 23732216.9
(22) Date of filing: 05.06.2023
(51) Int. Cl.: G02C 5/12

(54) **FRAME FOR EYEGLASSES WITH NOSE PAD**
BRILLENFASSUNG MIT NASENAUFLAGE
MONTURE POUR LUNETTES AVEC PLAQUETTE DE NEZ

(30) Priority: 08.06.2022 IT 202200012086
(43) Date of publication of application: 16.04.2025
(73) Proprietor: Luxottica S.r.l., 32021 Agordo (BL) (IT)
(72) Inventor: PARRA MARCHETTI, Giovanni, 00135 Roma (IT); SIRENA, Daniel, 32021 Agordo (IT)
(74) Representative: Modiano, Micaela Nadia
(86) International application number: PCT/IB2023/055764
(87) International publication number: WO 2023/238003

(56) References cited:
- CN-A- 113 189 787
- FR-A- 872 209
- JP-A- H01 109 320
- JP-U- S52 131 037
- KR-B1- 101 478 740
- US-A1- 2020 278 564
- US-A1- 2021 109 372

## Description

The present invention relates to a frame for eyeglasses with nose pads. More specifically, the present invention relates to a frame for eyeglasses with nose pads that are substantially concealed behind the frame.

As is known, the frames of eyeglasses are provided with nose pads that make it possible for the frames to be placed on the nose of the user. The nose pads are shaped in different ways, and their importance is evident for the comfort of fit of the frame.

It often happens in fact that nose pads that are too hard cause discomfort for the user, who, after wearing the frame for some time, feels the need to remove it from his or her face.

Furthermore, nose pads are also important elements in the appearance of the frame. In fact, they are elements that protrude from the frame, from behind it, i.e., directed toward the face of the user, but are still visible from the front, and therefore their appearance is a very important factor in the attractiveness that a frame can elicit in the user at the moment of purchase.

Furthermore, the nose pads can be made of different materials, more or less soft or more or less hard, but in both cases their presence paired with a frame renders that frame aesthetically much less "slender" than it could be in their absence. Frames for eyeglasses of the prior art are disclosed in US2020/278564A1 and FR872209A.

It is however clear that the nose pads must be present, for it to be possible to place the frame on the nose of the user, and therefore there is an unceasing search for solutions that can offer comfort to the user and at the same time render the nose pads aesthetically more pleasing.

The aim of the present invention is to provide a frame for eyeglasses with nose pads, in which the nose pads can be substantially hidden from the bulk of the frame.

Within this aim, an object of the present invention is to provide a frame for eyeglasses in which the nose pads have dimensions of space occupation that are such as to be substantially invisible with respect to the rest of the frame.

Another object of the present invention is to provide a frame for eyeglasses in which the nose pads are utterly comfortable for the user, and do not therefore constitute a hard point of contact on the nose of the user.

Another object of the present invention is to provide a frame for eyeglasses with nose pads that is highly reliable, easily and practically implemented and low cost.

This aim and these and other objects which will become better apparent hereinafter are achieved by a frame for eyeglasses as defined in claim 1.

Further characteristics and advantages of the invention will become better apparent from the description of preferred, but not exclusive, embodiments of the frame for eyeglasses according to the present invention, which are illustrated by way of non-limiting example in the accompanying drawings, wherein:

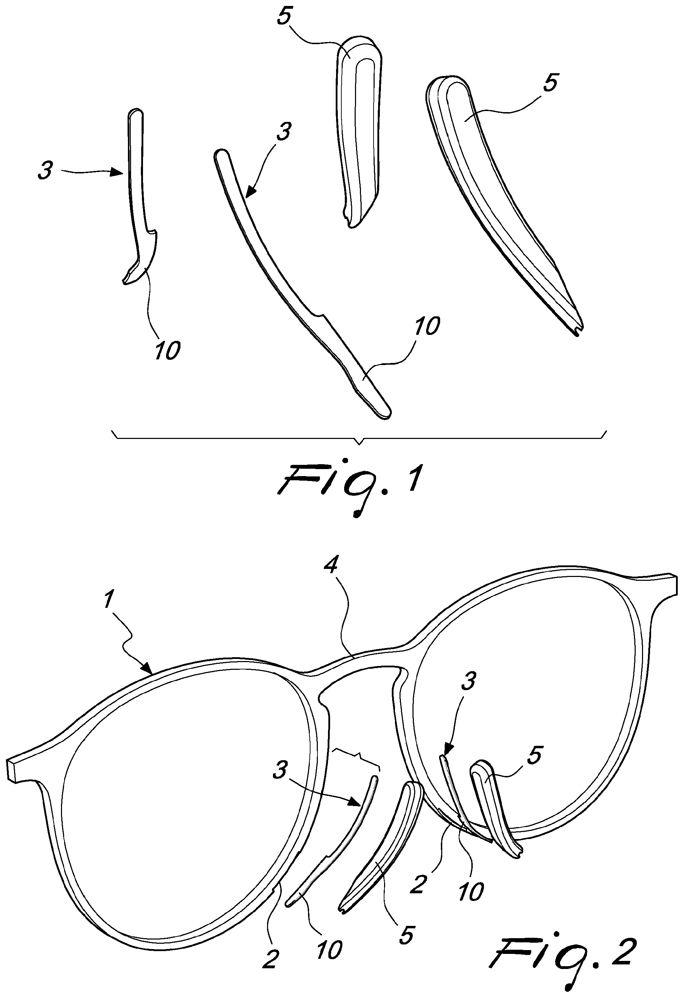

Figure 1 is an exploded perspective view of a pair of nose pads according to the present invention, according to a first embodiment;
Figure 2 is an exploded perspective view from the rear of a frame and an associated pair of nose pads according to the present invention, according to the first embodiment;

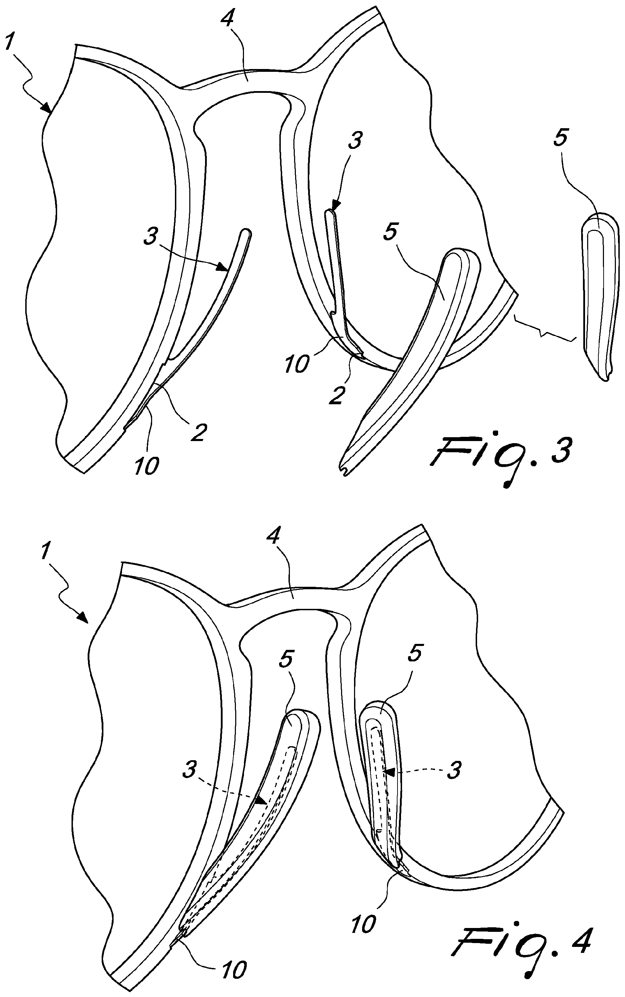

Figure 3 is a partial, and partially exploded, perspective view from the rear of the frame according to the present invention, with the nose pads mounted and the coverings of the nose pads removed, according to the first embodiment;
Figure 4 is a partial perspective view from the rear of the frame according to the present invention with the nose pads mounted, according to the first embodiment;

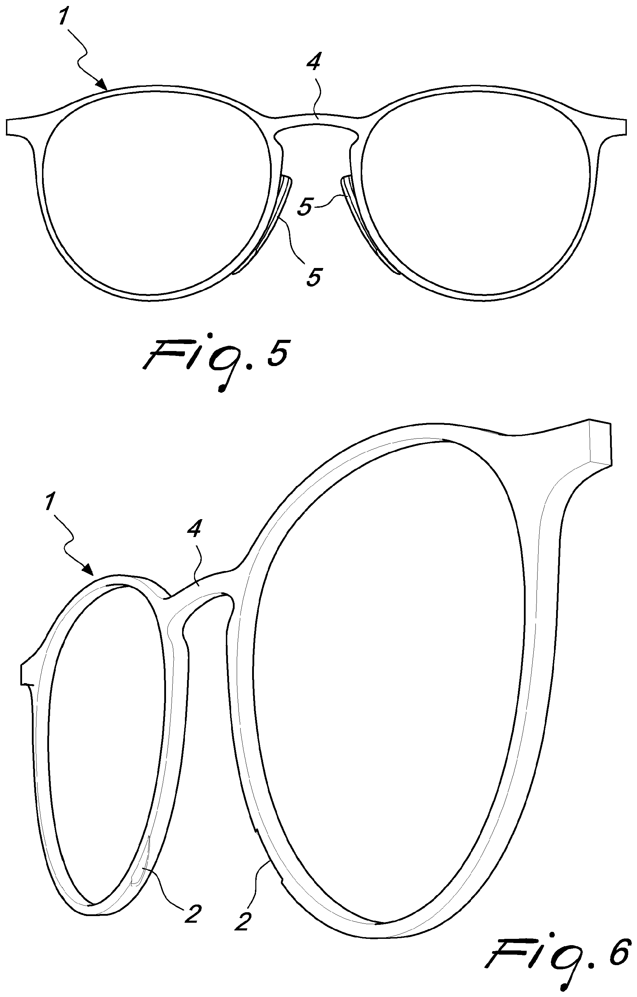

Figure 5 is a front elevation view of the frame according to the present invention, according to the first embodiment;
Figure 6 is a perspective view of the frame of Figures 1-5 with the nose pads removed;
Figure 7 is an exploded perspective view of a second embodiment of the frame according to the present invention;
Figure 8 is a perspective view of the second embodiment of the frame according to the present invention;
Figure 9 is a front elevation view of the frame according to the present invention, according to the second embodiment;
Figure 10 is a view from below of the frame according to the present invention, according to the second embodiment;
Figure 11 is a transverse cross-sectional view, taken along the plane XI-XI of Figure 9, of the frame according to the present invention.

With reference to the figures, the frame for eyeglasses according to the present invention, generally designated by the reference numeral 1, comprises a frame characterized in that, at each frame portion adapted to accommodate the lens, and specifically at a region of the frame that faces the region for holding the opposing lens, it has a seat 2, which takes the form of a recess or more generally a reduction in the profile of the frame 1, such as to accommodate a nose pad 3, which is conveniently shaped, with its own distal end portion ("distal" means the end of the nose pad furthest from the eye of the user), so as to be complementary to the seat 2 of the frame 1.

So the nose pad 3 extends upward from the seat 2 and the only engagement region of the nose pad 3 is constituted by its distal end portion 10.

More specifically, the seat 2 is shaped, for example, as shown in the figures, like a droplet, with a depth that decreases moving upward from below, i.e., the portion of seat 2 arranged furthest from the bridge 4 of the frame 1 has a greater depth than the portion of seat 2 that is arranged closest to the bridge 4 of the frame 1.

Conveniently, the nose pad 3, meaning one nose pad 3 for each one of the two frame portions that accommodate the respective lenses, is made of metallic material, in this manner being elastically yielding, flexible.

The nose pad 3 is conveniently soldered at the seat 2 defined above, and therefore extends upward from below, i.e. from the frame portion furthest from the bridge 4 of the frame 1, toward the bridge 4.

The soldering of the nose pad is done by soldering the distal end portion of the nose pad which is adapted to be accommodated in the seat 2.

The nose pad 3 can also be coupled in the seat 2 using adhesive bonding or the like.

Conveniently, the nose pad 3 is substantially rod-like.

The shape of the seat 2 of the nose pad 3 makes it possible for the nose pad to be substantially concealed behind the curved part of the frame portion 1 that accommodates the respective lenses, especially when the frame is being worn and the nose pads bend in contact with the nose of the user.

In fact, not only is the nose pad 3 coupled, by soldering (or the like) in the seat 2, but it is also conveniently curved with a curvature substantially similar to the curvature of the frame 1 so that the nose pad 3 is substantially concealed by superimposition with the frame portion that accommodates the respective lens.

On the one hand, it is possible to have a nose pad 3 that is extremely flexible, being made of metallic material and therefore intrinsically elastic, and on the other hand, it is possible to have the nose pad 3 substantially completely concealed behind the frame 1, so that when the user places the eyeglasses on his or her nose, an onlooker sees the frame 1 substantially "floating" on the nose of the user, in that the nose pad 3 disappears behind the frame, when the frame is seen from the front.

This offers not only exceptional comfort of wear for the user, but also an attractive appearance for the frame, which appears as though it completely lacks nose pads.

Conveniently, the nose pads 3 can be covered by a covering of plastic or rubber 5 that makes the nose pad even more comfortable when placed on the nose of the user.

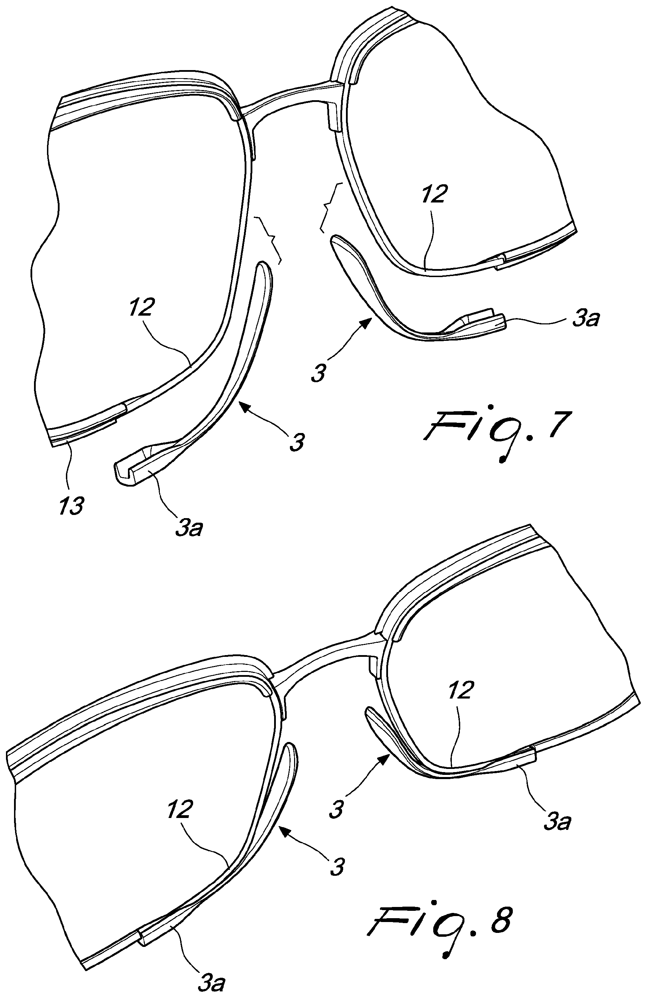

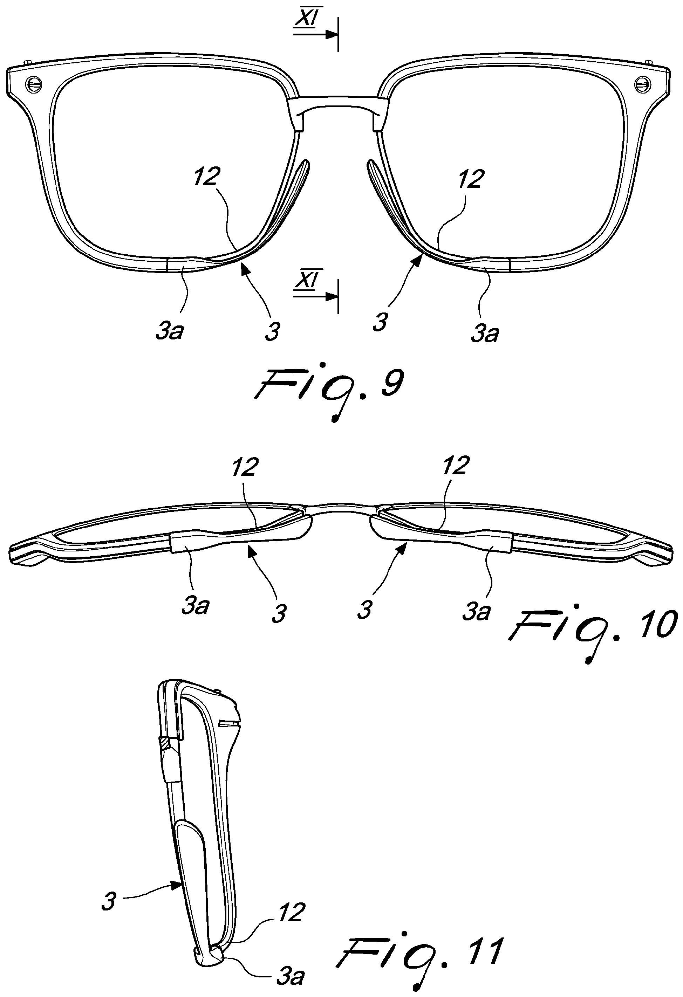

In a second embodiment, illustrated in Figures 7-11, the accommodation (coupling) seat of the nose pad 3, indicated by the reference numeral 12, is constituted by a frame portion that is thinner than the remaining part 13 of the frame 1.

In this embodiment, the nose pad 3 has a distal portion 3a, adapted to be joined to the frame, which is provided in such a way as to embrace the frame portion 12 with reduced thickness and to be closed at least partially around this, in order to then be soldered to the frame.

In this case, the frame is made of metal, as is the nose pad, and therefore the soldering is metal-to-metal.

In practice it has been found that the frame for eyeglasses according to the present invention fully achieves the set aim and objects, in that it makes it possible to have a pair of nose pads that are, on the one hand, extremely comfortable and, on the other hand, substantially concealed behind the thickness of the frame itself.

The frame for eyeglasses thus conceived is susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

This application claims priority from Italian Patent Application No. 102022000012086
Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A frame (1) for eyeglasses with nose pads (3), which comprises a frame (1) adapted to accommodate a pair of lenses, each frame portion being adapted to accommodate a respective lens and being provided with a seat (2; 12) which is adapted to accommodate a nose pad (3), **characterized in that** said seat is defined in a portion of the frame that is distant from the bridge (4) of the frame, said nose pad presenting a proximal end portion and a distal end portion (10), said seat (2) being adapted to accommodate said distal end portion (10) of said nose pad (3) so that said distal end portion (10) is level with the frame part that surrounds said seat (2), said proximal end portion being free and spaced from said frame, said nose pads (3) extending upward from below, i.e., toward the bridge (4) of the frame.

2. The frame according to claim 1, **characterized in that** said seat (2) of said frame has a thickness that decreases from the bottom upward, i.e., toward the bridge (4) of the frame.

3. The frame according to claim 1, **characterized in that** said seat (12) is constituted by a frame portion that is thinner than the remaining part (13) of the frame.

4. The frame according to claim 3, **characterized in that** a distal portion (3a) of said nose pad (3), adapted to be coupled to the frame, is provided in such a way as to embrace the frame portion (12) with reduced thickness and to be closed at least partially around this, in order to then be soldered.

5. The frame according to one or more of the preceding claims, **characterized in that** said nose pad is made of intrinsically elastic metallic material.

6. The frame according to one or more of the preceding claims, **characterized in that** said distal end portion (10) of said nose pad (3), adapted to be accommodated in said seat (2) of the frame, is shaped so as to be complementary to said seat (2).

7. The frame according to one or more of the preceding claims, **characterized in that** said nose pad (3) has a rod-like, curved shape that substantially reproduces the curvature of the frame portion that accommodates the lens.

8. The frame according to one or more of the preceding claims, **characterized in that** said distal end portion (10) of said nose pad (3), adapted to be accommodated in said seat (2), is soldered in said seat (2) of the frame.

9. The frame according to one or more of the preceding claims, **characterized in that** it comprises a covering (5) made of plastic material or rubber, which is adapted to be fitted on said nose pad (3) in order to improve user comfort.

10. The frame according to one or more of the preceding claims, **characterized in that** the nose pads (3) coupled in said respective seats (2) of said frame are substantially hidden behind the thickness of the frame, when the frame is viewed from the front.

## Patentansprüche

1. Fassung (1) für eine Brille mit Nasenauflagen (3), die eine Fassung (1) umfasst, die zur Aufnahme eines Linsenpaares angepasst ist, wobei jeder Fassungsabschnitt zur Aufnahme einer jeweiligen Linse angepasst ist und mit einem Sitz (2; 12) versehen ist, der zur Aufnahme einer Nasenauflage (3) angepasst ist, **dadurch gekennzeichnet, dass** der Sitz in einem Abschnitt der Fassung definiert ist, der von der Brücke (4) der Fassung entfernt ist, wobei die Nasenauflage einen proximalen Endabschnitt und einen distalen Endabschnitt (10) aufweist, wobei der Sitz (2) dazu angepasst ist, den distalen Endabschnitt (10) der Nasenauflage (3) so aufzunehmen, dass der distale Endabschnitt (10) in Höhe des Fassungsteils liegt, der den Sitz (2) umgibt, wobei der proximale Endabschnitt frei und von der Fassung beabstandet ist, wobei sich die Nasenauflagen (3) von unten nach oben, d. h. zur Brücke (4) der Fassung hin erstrecken.

2. Fassung nach Anspruch 1, **dadurch gekennzeichnet, dass** der Sitz (2) der Fassung eine Dicke aufweist, die von unten nach oben, d. h. zur Brücke (4) der Fassung hin abnimmt.

3. Fassung nach Anspruch 1, **dadurch gekennzeichnet, dass** der Sitz (12) durch einen Fassungsabschnitt gebildet ist, der dünner als der übrige Teil (13) der Fassung ist.

4. Fassung nach Anspruch 3, **dadurch gekennzeichnet, dass** ein distaler Abschnitt (3a) der Nasenauflage (3), der mit der Fassung koppelbar ist, so bereitgestellt ist, dass er den Fassungsabschnitt (12) mit reduzierter Dicke umgreift und zumindest teilweise um diesen herum geschlossen ist, um anschließend verlötet zu werden.

5. Fassung nach einem oder mehreren der vorhergehenden Ansprüche, **dadurch gekennzeichnet, dass** die Nasenauflage aus eigenelastischem metallischem Material besteht.

6. Fassung nach einem oder mehreren der vorhergehenden Ansprüche, **dadurch gekennzeichnet, dass** der distale Endabschnitt (10) der Nasenauflage (3), der in dem Sitz (2) der Fassung aufgenommen werden kann, komplementär zu dem Sitz (2) geformt ist.

7. Fassung nach einem oder mehreren der vorhergehenden Ansprüche, **dadurch gekennzeichnet, dass** die Nasenauflage (3) eine stabförmige, gekrümmte Form aufweist, die im Wesentlichen die Krümmung des die Linse aufnehmenden Fassungsabschnitts wiedergibt.

8. Fassung nach einem oder mehreren der vorhergehenden Ansprüche, **dadurch gekennzeichnet, dass** der distale Endabschnitt (10) der Nasenauflage (3), der in dem Sitz (2) untergebracht werden kann, in dem Sitz (2) der Fassung verlötet ist.

9. Fassung nach einem oder mehreren der vorhergehenden Ansprüche, **dadurch gekennzeichnet, dass** sie eine Abdeckung (5) aus Kunststoff oder Gummi umfasst, die zur Verbesserung des Benutzerkomforts auf die Nasenauflage (3) aufsetzbar ist.

10. Fassung nach einem oder mehreren der vorhergehenden Ansprüche, **dadurch gekennzeichnet, dass** die in den jeweiligen Sitzen (2) der Fassung gekoppelten Nasenauflagen (3) bei Betrachtung der Fassung von vorn im Wesentlichen hinter der Dicke der Fassung verborgen sind.

## Revendications

1. Monture (1) pour lunettes avec plaquettes de nez (3), comprenant une monture (1) conçue pour recevoir une paire de verres, chaque partie de monture étant conçue pour recevoir un verre respectif et étant pourvue d'un siège (2 ; 12) qui est conçu pour recevoir une plaquette de nez (3), **caractérisée en ce que** ledit siège est défini dans une partie de la monture qui est distante du pont (4) de la monture, ladite plaquette de nez présentant une partie d'extrémité proximale et une partie d'extrémité distale (10), ledit siège (2) étant conçu pour recevoir ladite partie d'extrémité distale (10) de ladite plaquette de nez (3) de sorte que ladite partie d'extrémité distale (10) soit au niveau de la partie de monture qui entoure ledit siège (2), ladite partie d'extrémité proximale étant libre et espacée de ladite monture, lesdites plaquettes de nez (3) s'étendant vers le bas, c'est-à-dire vers le pont (4) de la monture.

2. Monture selon la revendication 1, **caractérisée en ce que** ledit siège (2) de ladite monture a une épaisseur qui diminue depuis le bas vers le haut, c'est-à-dire vers le pont (4) de la monture.

3. Monture selon la revendication 1, **caractérisée en ce que** ledit siège (12) est constitué par une partie de monture qui est plus mince que la partie restante (13) de la monture.

4. Monture selon la revendication 3, **caractérisée en ce qu'**une partie distale (3a) de ladite plaquette de nez (3), conçue pour être accouplée à la monture, est fournie de manière à entourer la partie de monture (12) avec une épaisseur réduite et à être fermée au moins partiellement autour de celle-ci, afin d'être ensuite soudée.

5. Monture selon une ou plusieurs des revendications précédentes, **caractérisée en ce que** ladite plaquette de nez est réalisée en un matériau métallique intrinsèquement souple.

6. Monture selon une ou plusieurs des revendications précédentes, **caractérisée en ce que** ladite partie d'extrémité distale (10) de ladite plaquette de nez (3), conçue pour être reçue dans ledit siège (2) de la monture, est conformée de sorte à être complémentaire audit siège (2) .

7. Monture selon une ou plusieurs des revendications précédentes, **caractérisée en ce que** ladite plaquette de nez (3) a une forme courbe de type tige qui reproduit sensiblement la courbure de la partie de monture qui reçoit le verre.

8. Monture selon une ou plusieurs des revendications précédentes, **caractérisée en ce que** ladite partie d'extrémité distale (10) de ladite plaquette de nez (3), conçue pour être reçue dans ledit siège (2), est soudée dans ledit siège (2) de la monture.

9. Monture selon une ou plusieurs des revendications précédentes, **caractérisée en ce qu'**elle comprend un revêtement (5) en matière plastique ou en caoutchouc, qui est conçu pour être monté sur ladite plaquette de nez (3) afin d'améliorer le confort de l'utilisateur.

10. Monture selon une ou plusieurs des revendications précédentes, **caractérisée en ce que** les plaquettes de nez (3) accouplées dans lesdits sièges (2) respectifs de ladite monture sont sensiblement cachées derrière l'épaisseur de la monture, lorsque la monture est vue de face.
